# EUROPÄISCHE PATENTANMELDUNG

(11) **EP 1 270 285 A2**
(43) Veröffentlichungstag der Anmeldung: **02.01.2003**
(21) Anmeldenummer: 02010407.1
(22) Anmeldetag: 08.05.2002
(51) Int. Cl.: B60G 21/055, B60G 11/50, F16F 1/14

(54) **Drehstabfeder-Anordnung, insbesondere Stabilisator-Anordnung**

(30) Priorität: 23.06.2001 DE 10130401
(71) Anmelder: Bayerische Motoren Werke Aktiengesellschaft, 80809 München (DE)
(72) Erfinder: Schmidt, Roland, 82131 Stockdorf (DE); Kautz, Thomas, 85777 Kammerberg (DE); Wey, Torsten, 47239 Duisburg (DE)

(57) **Zusammenfassung**

Die Erfindung betrifft eine Drehstabfeder-Anordnung, insbesondere eine Stabilisator-Anordnung, für ein Zweispur-Fahrzeug mit zumindest einem vorgespannten Federelement, welches die Krafteinleitung in die Drehstabfeder oder den Stabilisator auf einen durch die Vorspannkraft des Federelementes bestimmten Wert begrenzt, wobei das Federelement als Überlastschutz fungiert, derart, dass bei Einleitung einer die Vorspannkraft nennenswert überschreitenden Kraft die Drehstabfeder-Anordnung ohne dieses Federelement Schaden nehmen würde. Die Drehstabfeder kann geteilt ausgebildet und das Federelement zwischen den beiden Teilen der Drehstabfeder eingespannt sein, wobei diese zwei Teile der Drehstabfeder mittels eines Aktuators gegeneinander verdrehbar sein können. Bevorzugt weisen die Drehstabfeder-Teile jeweils einen Mitnehmer auf, der unter Zwischenschaltung des Federelementes zwischen zwei Anschlägen, die für das erste Drehstabfeder-Teil fest mit dem Gehäuse des Aktuators und für das zweite Drehstabfeder-Teil mit dessen Stellglied verbunden sind, eingespannt ist.

## Beschreibung

Die Erfindung betrifft eine Drehstabfeder-Anordnung, insbesondere eine Stabilisator-Anordnung, für ein Zweispur-Fahrzeug mit zumindest einem vorgespannten Federelement, welches die Krafteinleitung in die Drehstabfeder oder den Stabilisator auf einen durch die Vorspannkraft des Federelementes bestimmten Wert begrenzt. Zum technischen Umfeld wird beispielshalber auf die EP 0 648 625 A1 verwiesen.

Stabilisator-Anordnungen oder allgemein Drehstabfeder-Anordnungen sind bei Zweispur-Fahrzeugen allgemein üblich. Beispielsweise um die Wirkung des Stabilisators auf die notwendigen Rollkräfte zu begrenzen, wurde bereits vorgeschlagen, vorgespannte Federelemente mit oder ohne Dämpfung als Zug- bzw. Druckstangen zwischen den Stabilisatorenden und den Radachsen des Fahrzeugs anzuordnen.

Hier soll nun aufgezeigt werden, wie Schädigungen an einer Drehstab- oder Stabilisator-Anordnung, die von einer Krafteinleitung in die Drehstab- oder Stabilisator-Anordnung hervorgerufen wird, welche die üblichen im Fahrbetrieb auftretenden Werte nennenswert überschreitet, vermieden werden kann (= Aufgabe der vorliegenden Erfindung). Dies ist dabei von besonderer Bedeutung, wenn zumindest zwei Teile der Drehstabfeder mittels eines Aktuators gegeneinander verdrehbar sind, da es dann gilt, diesen Aktuator vor einer Überlast - hervorgerufen durch eine unüblich hohe externe Krafteinleitung in die Drehstabfeder-Anordnung - zu schützen.

Die Lösung dieser Aufgabe ist dadurch gekennzeichnet, dass das Federelement als Überlastschutz fungiert, derart, dass bei Einleitung einer die Vorspannkraft nennenswert überschreitenden Kraft die Drehstabfeder-Anordnung ohne dieses Federelement Schaden nehmen würde. Vorteilhafte Aus- und Weiterbildungen sind Inhalt der Unteransprüche.

Erfindungsgemäß wird eine Vorrichtung vorgeschlagen, die bei Auftreten einer kurzzeitigen übermäßig hohen Belastung der Drehstabfeder-Anordnung diese dadurch schützt, dass die Krafteinleitung auf den Maximalwert der üblichen Belastung reduziert wird. Diese Vorrichtung besteht aus zumindest einem vorgespannten Federelement, wobei diese Vorspannung solchermaßen gewählt ist, dass bei der maximal auftretenden üblichen Belastung der Drehstab- oder Stabilisator-Anordnung das Federelement die einwirkende Kraft unverändert überträgt, während sich im Falle einer sog. Überlast, die lediglich kurzzeitig in Form eines Impulses oder dgl. auftritt, das Federelement verformt, wodurch die Drehstabfeder-Anordnung bzw. der Drehstab oder Stabilisator nicht mit diesem Überlast-lmpuls beaufschlagt werden. Die Belastung der Drehstabfeder-Anordnung bleibt somit auf das übliche Maß, das durch die Vorspannkraft des Federelements definiert ist, reduziert.

Wie bereits erwähnt ist diese vorgeschlagene Maßnahme besonders hilfreich für ein sog. aktives Fahrwerk eines Kraftfahrzeugs, wobei ein Stabilisator (oder allgemein eine Drehstabfeder) geteilt ausgebildet ist und die (beiden) Teile des Stabilisators (oder der Drehstabfeder) mittels eines Aktuators oder Stellmotors gegeneinander verdrehbar sind, so wie dies bspw. in der DE 44 43 809 A1 gezeigt ist. Nicht nur ein solcher Aktuator, sondern die gesamte Stabilisator-Anordnung kann dabei aufgrund irgendwelcher Randbedingungen derart ausgelegt oder dimensioniert sein, dass die Grenze der mechanischen Belastung (bspw. auch hinsichtlich der Werkstofffestigkeit des Stabilisators selbst, insbesondere jedoch hinsichtlich der Drehmomentbelastung des Aktuators oder Stellmotors) speziell bei extremem Fahrbetrieb erreicht wird. Dabei ist es bislang erforderlich, die Stabilisator- oder Drehstabfeder-Anordnungen nicht nur auf die größtmögliche fahrdynamische Belastung hin auszulegen, sondern dabei sogar noch eine zusätzliche Belastung (im folgenden "Überlast" genannt) zu berücksichtigen, die sich bspw. aus dem Überfahren einer Schwelle oder dgl. ergibt. Dabei müssen bislang solche Ereignisse bei der kräftemäßigen Auslegung des Systems berücksichtigt werden, wenngleich die Fälle, in denen eine solch extreme Belastung mit gleichzeitiger Überlast, d.h. eine solch hohe Krafteinleitung auftritt, äußerst selten sind.

Mit der vorliegenden Erfindung hingegen muss das System bzw. die Stabilisator- oder Drehstabfeder-Anordnung nur auf die übliche Maximalbelastung hin ausgelegt werden. Erfolgt eine noch höhere impulsartige, d.h. kurzzeitige Krafteinleitung, wobei diese zusätzliche Kraft die Vorspannkraft des Federelementes überschreitet, so wird das Federelement komprimiert, so dass diese nur kurzzeitig in Form eines Stoßes oder dgl. einwirkende Überlast vom Stabilisator bzw. von einem im System bzw. in der Anordnung vorgesehenen Aktuator oder Stellmotor ferngehalten wird.

Dabei sei darauf hingewiesen, dass ein als Überlastschutz fungierendes und daher auch als Überlast-Feder bezeichnetes Federelement grundsätzlich in einen geeignet geteilten Stabilisator eingefügt werden kann, ohne dass dieser mit einem Aktuator versehen ist, da dann ein einziges vorgespanntes erfindungsgemäßes Federelement ausreicht. Hingegen werden bei einer Anordnung entsprechend der o.g. EP 0 648 625 A1 zwei derartige Überlast-Federelemente benötigt.

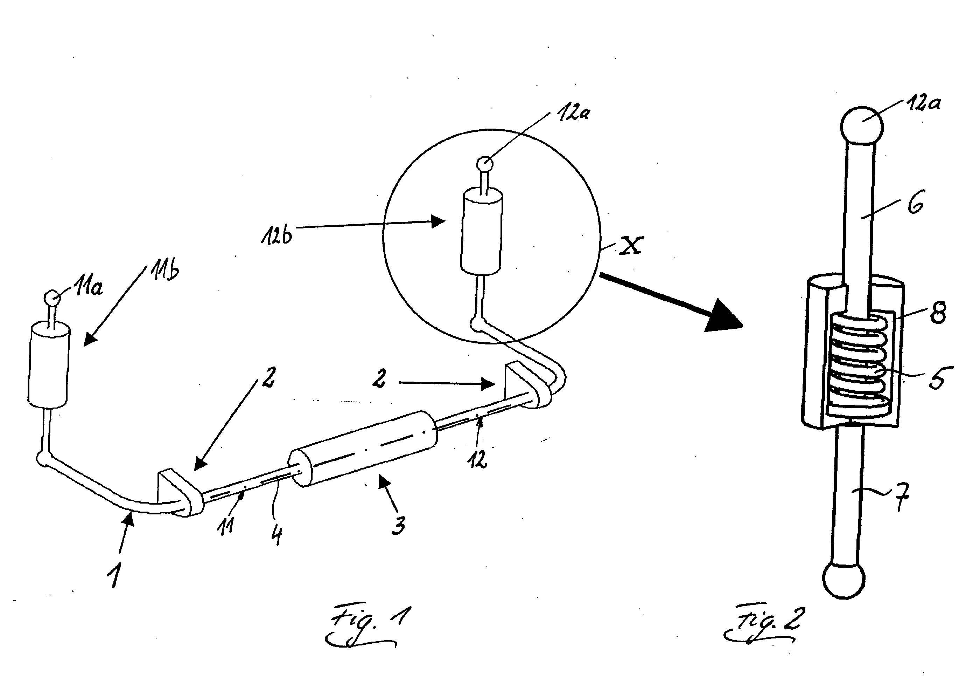

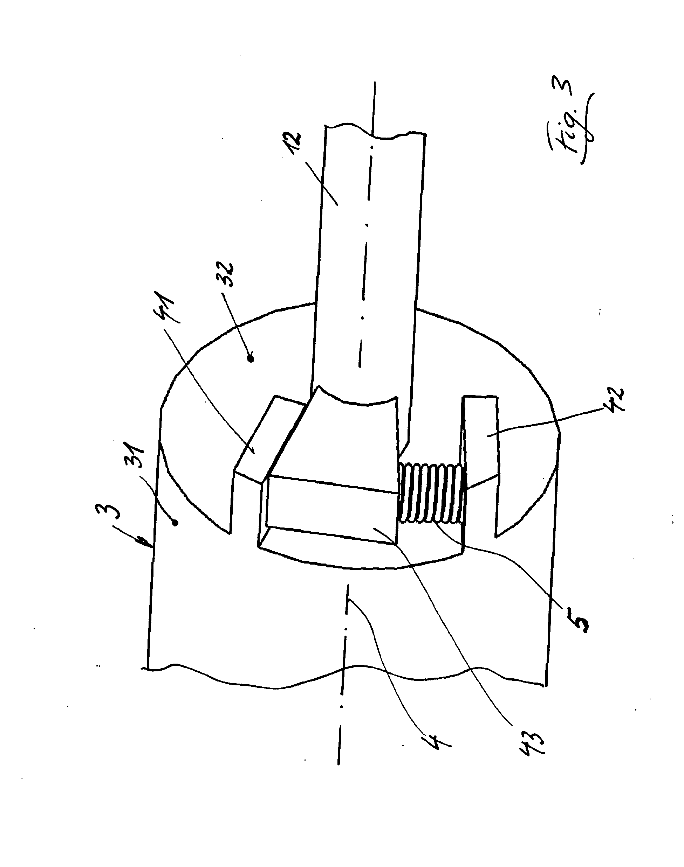

Eine erfindungsgemäße Stabilisator-Anordnung mit einem geteilten Stabilisator (bzw. einer geteilten Drehstabfeder) mit einem Aktuator sowie mit zwei als Überlastungsschutz fungierenden Federelementen ist in der beigefügten **Figur 1** dargestellt, wobei **Figur 2** das Detail X aus Figur 1 in einer aufgeschnittenen Darstellung zeigt. **Figur 3** zeigt eine Detailansicht einer anderen Ausführungsform, wobei die Federelemente an den Seitenflächen des Aktuators oder Stellmotors angeordnet sind, mit Hilfe dessen die beiden Stabilisator-Hälften gegeneinander verdrehbar sind. Erfindungswesentlich können sämtliche näher beschriebenen Merkmale sein.

Bezugnehmend auf **Figur 1** ist mit der Bezugsziffer 1 ein geteilter Stabilisator eines Kraftfahrzeugs, insbesondere eines PKW's bezeichnet, der in zwei Lagerstellen 2 in üblicher Weise gelagert ist und mit seinen beiden freien Enden 11a, 12a jeweils an einem nicht dargestellten linken bzw. rechten Radführungselement des zweispurigen Kraftfahrzeuges angebunden oder angelenkt ist. Der Stabilisator 1 besteht dabei auf zwei Stabilisator-Teilen 11, 12, die mittels eines sog. Aktuators 3 (auch Stellmotor 3 genannt) um eine Achse 4, die durch die quasi in Reihe unter Zwischenschaltung des Aktuators 3 hintereinander angeordneten Abschnitte der Stabilisator-Teile 11, 12 definiert wird, (geringfügig) gegeneinander verdreht werden können.

Jedes Stabilisator-Teil 11, 12 ist dabei über eine sog. Pendelstütze 11b bzw. 12b am bereits genannten, nicht dargestellten linken bzw. rechten Radführungselement abgestützt, d.h. zwischen dem eigentlichen Drehstabfeder-Element jedes Stabilisator-Teils 11 bzw. 12 und dessen Anlenkpunkt 11a bzw. 12a am jeweiligen Radführungselement ist eine sog. Pendelstütze 11b bzw. 12b zwischengeschaltet, von denen die (hier rechte) Pendelstütze 12b in **Figur 2** vergrößert und teilweise aufgebrochen dargestellt ist.

Bei diesem Ausführungsbeispiel nach den Figuren 1, 2 ist jede Pendelstütze 12b bzw. 11b geteilt ausgebildet und besteht aus einem oberen stabförmigen Abschnitt 6 und einem unteren stabförmigen Abschnitt 7, die sich lediglich über ein vorgespanntes Federelement 5 aufeinander abstützen. Dabei ist das bevorzugt als Schrauben-Druckfeder ausgebildete Federelement 5 in einem Zylinder 8, der bevorzugt starr mit einem der Abschnitte 6 oder 7 verbunden ist, geführt. Das Federelement 5 ist nun solchermaßen vorgespannt, d.h. mit einer derartigen Vorspannkraft zwischen den beiden gegeneinander verschiebbaren Abschnitten 6 und 7 der Pendelstütze 12b bzw. 11b eingespannt, dass übliche Kräfte, die vom Radführungselement in den Stabilisator 1 eingeleitet werden, unverfälscht übertragen werden, d.h. dass dabei das Federelement 5 nicht verformt (bspw. komprimiert) wird. Tritt jedoch ein Überlastfall auf, d.h. überschreitet die vom Radführungselement in den Stabilisator 1 eingeleitete Kraft den Wert der Vorspannkraft des Federelementes 5, so wird dieses zunächst verformt und es sind der Stabilisator 1 bzw. die gezeigte Stabilisator-Anordnung und somit insbesondere auch der Aktuator 3 für die Dauer dieses Überlast-lmpulses vor dieser nennenswert über der üblichen Belastung liegenden Krafteinleitung geschützt.

Eine weitere Ausführungsform der vorliegenden Erfindung ist in **Fig.3** lediglich in einem Ausschnitt dargestellt. Gezeigt ist eine perspektivische Seitenansicht auf den Aktuator 3, mit Hilfe dessen die beiden Stabilisator-Teile 11, 12 um die Achse 4 gegeneinander verdreht werden können. Hierzu ist das hier gezeigte Stabilisator-Teil 12 mittels eines im Gehäuse 31 des Aktuators 3 vorgesehenen Stellgliedes 32 um die Längsachse 4 dieses Stabilisator-Teils 12 gegenüber dem Gehäuse 31 des Aktuators 3 verdrehbar. Dabei stützt sich - wie ersichtlich - das Stabilisator-Teil 12 unter Zwischenschaltung eines erfindungsgemäßen Federelementes 5 am Stellglied 32 ab, was im folgenden noch näher erläutert wird. Vorab sei jedoch erwähnt, dass auf der gegenüberliegenden, hier in **Fig.3** nicht sichtbaren Stirnseite des Aktuators 3 das dortige andere Stabilisator-Teil 11 (vgl. hierzu wieder **Fig.1**) unter vergleichbarer Zwischenschaltung eines solchen Überlast-Federelementes 5 mit dem Gehäuse 31 des Aktuators 3 verbunden ist.

Zurückkommend auf die in **Fig.3** sichtbare Stirnseite des Aktuators 3 erkennt man zwei auf dem Stellglied 32 um einen Winkelsektor voneinander beabstandet angebrachte Anschläge 41, 42. Das Stabilisator-Teil 12 selbst ist mit einem Mitnehmer 43 versehen, der zwischen die beiden Anschläge 41, 42 hineinragt. Konkret liegt der Mitnehmer 43 mit seiner ersten Seite am ersten Anschlag 41 an bzw. wird durch das Überlast-Federelement 5, das zwischen der zweiten Seite des Mitnehmers 43 und dem zweiten Anschlag 42 eingespannt ist, mit seiner ersten Seite gegen den ersten Anschlag 41 gedrückt. Dabei ist das Federelement 5 derart stark vorgespannt, dass bei üblichen in das Stabilisator-Teil 12 eingeleiteten Kräften bzw. bei üblichen vom Stellglied 32 auf das Stabilisator-Teil 12 übertragenen Verstell-Kräften der figürlich dargestellte Zustand erhalten bleibt, d.h. dass der Mitnehmer 43 dann stets am Anschlag 41 anliegt. Wird hingegen das zugeordnete Radführungselement bzw. der hier nicht sichtbare Anlenkpunkt 12a des Stabilisator-Teils 12 mit Überlast beaufschlagt, d.h. mit einer Kraft, die die Vorspannkraft des Federelements 5 nennenswert überschreitet, so wird das als Schrauben-Druckfeder ausgebildete Federelement 5 komprimiert, so dass die die Vorspannkraft überschreitende Überlast-Komponente wie gewünscht vom Aktuator ferngehalten wird. Diese Überlast-Komponente wird dann offensichtlich nicht an das Aktuator-Stellglied 32 weitergeleitet und somit nicht in den Aktuator 3 eingeleitet. Dieser braucht daher nicht auf derart extreme Belastungen hin ausgelegt zu sein.

Vergleichbar der in **Fig.3** sichtbaren Aktuator-Stirnseite ist die Anordnung auf der gegenüberliegenden Stirnseite, nur dass dort die Anschläge 41 und 42 am Gehäuse des Aktuators 3 (anstatt an dessen Stellglied 32) vorgesehen sind, wobei noch darauf hingewiesen sei, dass selbstverständlich eine Vielzahl von Details insbesondere konstruktiver Art durchaus abweichend von den gezeigten Ausführungsbeispielen gestaltet sein kann, ohne den Inhalt der Patentansprüche zu verlassen.

## Patentansprüche

1. Drehstabfeder-Anordnung, insbesondere Stabilisator-Anordnung, für ein Zweispur-Fahrzeug mit zumindest einem vorgespannten Federelement (5), welches die Krafteinleitung in die Drehstabfeder oder den Stabilisator (1) auf einen durch die Vorspannkraft des Federelementes (5) bestimmten Wert begrenzt,
**dadurch gekennzeichnet, dass** das Federelement (5) als Überlastschutz fungiert, derart, dass bei Einleitung einer die Vorspannkraft nennenswert überschreitenden Kraft die Drehstabfeder-Anordnung ohne dieses Federelement (5) Schaden nehmen würde.

2. Drehstabfeder-Anordnung nach Anspruch 1,
**dadurch gekennzeichnet, dass** die Drehstabfeder (1) geteilt ausgebildet und das Federelement (5) zwischen den beiden Teilen der Drehstabfeder eingespannt ist.

3. Drehstabfeder-Anordnung nach Anspruch 1 oder 2,
wobei zumindest zwei Teile (11, 12) der Drehstabfeder (1) mittels eines Aktuators (3) gegeneinander verdrehbar sind.

4. Drehstabfeder-Anordnung nach einem der vorangegangenen Ansprüche,
wobei die Drehstabfeder-Teile (11, 12) jeweils einen Mitnehmer (43) aufweisen, der unter Zwischenschaltung des Federelementes (5) zwischen zwei Anschlägen (41, 42), die für das erste Drehstabfeder-Teil (11) fest mit dem Gehäuse (31) des Aktuators (3) und für das zweite Drehstabfeder-Teil (12) mit dessen Stellglied (32) verbunden sind, eingespannt ist.
